# EUROPEAN PATENT SPECIFICATION

(11) **EP 4 280 662 B1**
(45) Date of publication and mention of the grant of the patent: **11.03.2026**
(21) Application number: 22742106.2
(22) Date of filing: 17.01.2022
(51) Int. Cl.: H04W 24/04, H04W 48/08, H04L 67/12, H04L 67/14, H04L 67/51, H04W 48/14, H04B 7/185

(54) **UNMANNED AERIAL VEHICLE COMMUNICATION MANAGEMENT METHOD AND APPARATUS**
VERFAHREN UND VORRICHTUNG ZUR KOMMUNIKATIONSVERWALTUNG EINES UNBEMANNTEN LUFTFAHRZEUGS
PROCÉDÉ ET APPAREIL DE GESTION DE COMMUNICATION DE VÉHICULE AÉRIEN SANS PILOTE

(30) Priority: 25.01.2021 CN 202110099891
(43) Date of publication of application: 22.11.2023
(73) Proprietor: Huawei Technologies Co., Ltd., Shenzhen, Guangdong 518129 (CN)
(72) Inventor: ZHANG, Chengchen, Shenzhen, Guangdong 518129 (CN); ZHU, Qianghua, Shenzhen, Guangdong 518129 (CN)
(74) Representative: Isarpatent
(86) International application number: PCT/CN2022/072317
(87) International publication number: WO 2022/156627

(56) References cited:
- EP-A1- 3 901 726
- CA-A1- 3 128 272
- CN-A- 108 064 465
- CN-A- 109 118 827
- CN-A- 111 435 257
- CN-A- 111 490 816
- US-A1- 2017 103 659
- US-A1- 2020 120 563
- US-A1- 2020 236 602
- SAMSUNG: "KI #2, New Sol: Network Assisted Flight Path Authorization", vol. SA WG2, no. 20200601 - 20200612, 22 May 2020 (2020-05-22), XP052460885, Retrieved from the Internet <URL:https://ftp.3gpp.org/tsg_sa/WG2_Arch/TSGS2_139e_Electronic/Docs/S2-2004086.zip S2-2004086_IDUAS_pCR_23.754_Network Assisted Flight path authorization.docx> [retrieved on 20200522]

## Description

Priority is claimed to Chinese Patent Application No. 202110099891.0, filed on January 25, 2021 and entitled "UNMANNED AERIAL VEHICLE COMMUNICATION MANAGEMENT METHOD AND APPARATUS".

### TECHNICAL FIELD

This disclosure generally relates to the communication field, and more specifically, to the field of unmanned aerial vehicle communication management. The invention in particular relates to communication management methods and a service management function network element as well as a system.

### BACKGROUND

In recent years, unmanned aerial vehicles are widely used, including small unmanned aerial vehicles for individual entertainment and various unmanned aerial vehicles that bring economic benefits. However, management problems occur as the unmanned aerial vehicles bring economic and recreational benefits.

Currently, in the 3rd generation partnership project (3rd generation partnership project, 3GPP), a networked unmanned aerial vehicle (unmanned aerial vehicle, UAV) is studied. Accessing a 3GPP network by an unmanned aerial vehicle facilitates remote control and management of the unmanned aerial vehicle. In a 3GPP unmanned aerial system architecture, an unmanned aerial vehicle and an unmanned aerial vehicle controller separately access the 3GPP network, and communicate with each other through the 3GPP network. Because operations such as unmanned aerial vehicle control performed when the unmanned aerial vehicle is networked require support from a base station and a core network, the unmanned aerial vehicle cannot be networked to perform flight tasks in all areas. Therefore, before command and control (command and control, C2) communication, the unmanned aerial vehicle usually requests authorization from an unmanned aerial system traffic management (UAS traffic management, UTM) or an unmanned aerial system service supplier (UAS service supplier, USS). If a current network capability on a flight path does not support networked flight of the unmanned aerial vehicle, establishment of a C2 communication connection of the unmanned aerial vehicle is rejected.

For example, if the unmanned aerial vehicle is initially registered in a 5G system (5G system, 5GS), the unmanned aerial vehicle may no longer attempt to request flight path authorization after flight path authorization is rejected. In this way, a flight service may not be completed because network resources are not fully utilized. For example, in this case, a network capability in an evolved packet system (evolved packet system, EPS) may meet a flight requirement. In some other cases, deregistration is performed after flight path authorization is rejected, and EPS attachment is performed and attempt is made again to request flight path authorization. This may result in a ping-pang phenomenon. For example, in this case, the network capability in the EPS may not meet the flight requirement.

CN 111435257 A discloses a moving route determination method and related equipment. The method comprises the steps that a service control function receives a first request which comprises at least one of a destination of a terminal, a departure place of the terminal, and a communication demand of the terminal; the service control function determines at least one moving route; and the service control function sends the at least one moving route, wherein the at least one moving route is used for indicating the moving route of the terminal. This is done in order to ensure a normal flight of an unmanned aerial vehicle.

The standard change proposal by SAMSUNG: "KI #2, New Sol: Network Assisted Flight Path Authorization", 3GPP DRAFT; 82-2004086, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, vol. SA WG2, no. 20200601 - 20200612 22 May 2020 (2020-05-22), XP052460885" relates to the technical problem of the challenge of ensuring safe and efficient flight path authorization for Unmanned Aerial Vehicles (UAVs) or drones, particularly in terms of maintaining network connectivity and minimizing interference with ground-based User Equipment (UE). It is described here that UAVs have unique mobility characteristics that differ significantly from typical ground-based UEs like smartphones. These differences necessitate specialized considerations for network coverage, Quality of Service (QoS), and interference management to ensure safe and reliable UAV operations. The change proposal suggests providing network capability information (such as coverage maps and expected QoS levels) to Unmanned Traffic Management (UTM) or Unmanned Aircraft System Service Suppliers (USS) to assist in UAV flight path authorization. The solution provides the UTM/USS with detailed network capability information, including coverage maps, QoS levels, and no-fly zones, to help plan UAV flight paths that ensure continuous connectivity and meet service requirements.A Policy Control Function (PCF) derives network capability information, including no-fly areas and expected QoS levels, which is then translated into geographical representations by a Network Exposure Function (NEF). The UTM/USS subscribes to network capability information via NEF, which then communicates with PCF to obtain and translate the required data. And finally the UTM/USS uses the provided network capability information to authorize or adjust UAV flight paths, ensuring safe and reliable operations.

### SUMMARY

The object of the present invention is how to provide communication management methods and a service management function network element as well as a system to provide still further improvements to efficiently and appropriately manage a networked flight of an unmanned aerial vehicle. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to the invention, the invention provides a communication management method and a device, so that a service management function network element sends first indication information to a session management function network element, where the first indication information indicates whether a terminal can obtain a network service through a first system, to efficiently and appropriately manage networked flight of an unmanned aerial vehicle (terminal).

According to a first aspect according to the invention, the invention provides a communication management method, and this method is performed by a service management function network element. The method includes: receiving a first message, where the first message includes network capability information of a plurality of systems, the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; determining, based on the network capability information of the plurality of systems, whether the terminal can obtain the network service through a first system, where the first system is one or more of the plurality of systems; and sending first indication information, where the first indication information indicates whether the terminal can obtain the network service through the first system.

According to the technical solution of this application, the service management function network element receives the first message, where the first message includes the network capability information of the plurality of systems; and determines, based on the network capability information of the plurality of systems, whether the terminal can obtain the network service through the first system, where the first system is one or more of the plurality of systems. The service management function network element sends the first indication information, where the first indication information indicates whether the terminal can obtain the network service through the first system, so that networked flight of an unmanned aerial vehicle can be efficiently and appropriately managed.

With reference to the first aspect, according to the invention, that the first indication information indicates whether the terminal can obtain the network service through the first system includes: The first indication information indicates that the terminal cannot obtain the network service through the first system.

With reference to the first aspect according to the invention, the method further includes: The first indication information indicates that the terminal can obtain the network service through a second system, where the second system is one or more of the plurality of systems, and the first system and the second system have no intersection. According to the foregoing technical solution, the terminal can fully use network resources of the plurality of systems to complete a flight task, thereby reducing waste of the network resources.

With reference to the first aspect or some implementations of the first aspect, in some other possible implementations of the first aspect, the method further includes: The first indication information indicates that the terminal cannot obtain the network service through any one of the plurality of systems. In the foregoing technical solution, no further attempt is made by the terminal to request to obtain the network service through any system, thereby avoiding a ping-pang phenomenon.

With reference to the first aspect or some implementations of the first aspect, in some other possible implementations of the first aspect, the method further includes: sending a second message, where the second message is used to request the network capability information of the plurality of systems, and the second message includes the first area and/or the first time range.

With reference to the first aspect or some implementations of the first aspect, in some other possible implementations of the first aspect, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

With reference to the first aspect or some implementations of the first aspect, in some other possible implementations of the first aspect, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

According to a second aspect according to the invention, another communication management method is provided, and this method is performed by a policy management function network element. The method includes: determining network capability information of a plurality of systems, where the plurality of systems include a system that can be selected by a terminal, the network capability information is information about a capability of the plurality of systems to provide a network service for the terminal in a first area and/or a first time range, the first area includes a planned flight area of the terminal, and the first time range includes a planned flight time range of the terminal; and sending a first message, where the first message includes the network capability information of the plurality of systems.

According to a third aspect, where the third aspect and any of its implementations and options below are not claimed, a communication management method is provided, and the method is performed by a policy management function network element. The method includes: determining network capability information of a plurality of systems, where the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; and sending first indication information based on the network capability information of the plurality of systems, where the first indication information indicates whether the terminal can obtain the network service through a first system, the first system is one or more of the plurality of systems, and the first system includes a system currently accessed by the terminal. In the foregoing technical solution, the first indication information indicates whether the terminal can obtain the network service through the first system, so that networked flight of an unmanned aerial vehicle can be efficiently and appropriately managed.

With reference to the third aspect, in some not claimed implementations of the third aspect, that the first indication information indicates whether the terminal can obtain the network service through the first system includes: The first indication information indicates that the terminal cannot obtain the network service through the first system.

With reference to the third aspect or some not claimed implementations of the third aspect, in some other possible implementations of the third aspect, the first indication information indicates that the terminal is redirected to a second system to obtain the network service, where the second system is one or more of the plurality of systems, and the first system and the second system have no intersection. According to the foregoing technical solution, the terminal can fully use network resources of the plurality of systems to complete a flight task, thereby reducing waste of the network resources.

With reference to the third aspect or some implementations of the third aspect, in some other possible not claimed implementations of the third aspect, the method further includes: The first indication information indicates that the terminal cannot obtain the network service through any one of the plurality of systems. In the foregoing technical solution, no further attempt is made by the terminal to request to obtain the network service through any system, thereby avoiding a ping-pang phenomenon.

With reference to the third aspect or some implementations of the third aspect, in some other possible not claimed implementations of the third aspect, before the determining network capability information of a plurality of systems, the method includes: receiving a second message, where the second message is used to request the network capability information of the plurality of systems, and the second message includes the first area and/or the first time range; and determining the network capability information of the plurality of systems based on the second message.

With reference to the third aspect or some implementations of the third aspect, in some other possible not claimed implementations of the third aspect, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

With reference to the third aspect or some implementations of the third aspect, in some other possible not claimed implementations of the third aspect, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

According to a fourth aspect, wherein the fourth aspect and any of its implementations and options are not claimed, another communication management method is provided. The method is performed by a session management function network element. The method includes: receiving first indication information, where the first indication information indicates whether a terminal can obtain a network service through a first system in at least one of a first area and a first time range; and sending a third message to the terminal based on the first indication information, where the third message indicates whether the terminal is allowed to obtain the network service through the first system, the first area includes a planned flight area of the terminal, the first time range includes a planned flight time range of the terminal, the first system is one or more of a plurality of systems, the plurality of systems include a system that can be selected by the terminal, and the first system includes a system currently accessed by the terminal. In the foregoing technical solution, the first indication information indicates whether the terminal can obtain the network service through the first system, so that networked flight of an unmanned aerial vehicle can be efficiently and appropriately managed.

With reference to the fourth aspect, in some not claimed implementations of the fourth aspect, that the third message indicates whether the terminal can obtain the network service through the first system includes: The third message indicates that the terminal is not allowed to obtain the network service through the first system.

With reference to the fourth aspect or some implementations of the fourth aspect, in some other possible not claimed implementations of the fourth aspect, the method further includes: The first indication information indicates that the terminal is redirected to a second system to obtain the network service, where the second system is one or more of the plurality of systems, the first system and the second system have no intersection, and the third message indicates that the terminal is redirected to the second system to obtain the network service. According to the foregoing technical solution, the terminal can fully use network resources of the plurality of systems to complete a flight task, thereby reducing waste of the network resources.

With reference to the fourth aspect or some implementations of the fourth aspect, in some other possible not claimed implementations of the fourth aspect, the method further includes: The third message indicates that the terminal is not allowed to obtain the network service through any one of the plurality of systems. In the foregoing technical solution, no further attempt is made by the terminal to request to obtain the network service through any system, thereby avoiding a ping-pang phenomenon.

According to a fifth aspect, where the fifth aspect and any of its implementations and options below are not claimed, a communication management method is provided. The method includes: A policy management function network element determines network capability information of a plurality of systems, where the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal. The policy management function network element sends a first message to a service management function network element, where the first message includes the network capability information of the plurality of systems. The service management function network element determines, based on the network capability information of the plurality of systems, whether the terminal can obtain the network service through a first system, where the first system is one or more of the plurality of systems. The service management function network element sends first indication information to a session management function network element, where the first indication information indicates whether the terminal can obtain the network service through the first system. The session management function network element sends a third message to the terminal based on the first indication information, where the third message indicates whether the terminal is allowed to obtain the network service through the first system. In the foregoing technical solution, the first indication information indicates whether the terminal can obtain the network service through the first system, so that networked flight of an unmanned aerial vehicle can be efficiently and appropriately managed.

According to a sixth aspect according to the invention, the invention also provides a service management function network element, including: a receiving module, configured to receive a first message, where the first message includes network capability information of a plurality of systems, the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; a determining module, configured to determine, based on the network capability information of the plurality of systems, whether the terminal can obtain the network service through a first system, where the first system is one or more of the plurality of systems; and a sending module, configured to send first indication information, where the first indication information indicates whether the terminal can obtain the network service through the first system. In the foregoing technical solution, the first indication information indicates whether the terminal can obtain the network service through the first system, so that networked flight of an unmanned aerial vehicle can be efficiently and appropriately managed.

With reference to the sixth aspect, according to the invention, the sending module is specifically configured to: the first indication information indicates that the terminal cannot obtain the network service through the first system.

With reference to the sixth aspect according to the invention, the sending module is further configured to: the first indication information indicates that the terminal can obtain the network service through a second system, where the second system is one or more of the plurality of systems, and the first system and the second system have no intersection. According to the foregoing technical solution, the terminal can fully use network resources of the plurality of systems to complete a flight task, thereby reducing waste of the network resources.

With reference to the sixth aspect or some implementations of the sixth aspect, in some other possible implementations of the sixth aspect, the sending module is further configured to: the first indication information indicates that the terminal cannot obtain the network service through any one of the plurality of systems. In the foregoing technical solution, no further attempt is made by the terminal to request to obtain the network service through any system, thereby avoiding a ping-pang phenomenon.

With reference to the sixth aspect or some implementations of the sixth aspect, in some other possible implementations of the sixth aspect, the sending module is further configured to send a second message, where the second message is used to request the network capability information of the plurality of systems, and the second message includes the first area and/or the first time range.

With reference to the sixth aspect or some implementations of the sixth aspect, in some other possible implementations of the sixth aspect, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

With reference to the sixth aspect or some implementations of the sixth aspect, in some other possible implementations of the sixth aspect, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

According to a seventh aspect according to the invention, a system includes a policy management function network element, including: a determining module, configured to determine network capability information of a plurality of systems, the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; and a sending module, configured to send a first message, where the first message includes the network capability information of the plurality of systems.

According to an eighth aspect, where the eighth aspect and any of its implementations and options below are not claimed, a policy management function network element is provided, including: a determining module, configured to determine network capability information of a plurality of systems, where the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; and a sending module, configured to send first indication information based on the network capability information of the plurality of systems, where the first indication information indicates whether the terminal can obtain the network service through a first system, the first system is one or more of the plurality of systems, and the first system includes a system currently accessed by the terminal. In the foregoing technical solution, the first indication information indicates whether the terminal can obtain the network service through the first system, so that networked flight of an unmanned aerial vehicle can be efficiently and appropriately managed.

With reference to the eighth aspect, in some not claimed implementations of the eighth aspect, the sending module is specifically configured to: the first indication information indicates that the terminal cannot obtain the network service through the first system.

With reference to the eighth aspect or some implementations of the eighth aspect, in some other possible not claimed implementations of the eighth aspect, the sending module is specifically configured to: the first indication information indicates that the terminal is redirected to a second system to obtain the network service, where the second system is one or more of the plurality of systems, and the first system and the second system have no intersection. According to the foregoing technical solution, the terminal can fully use network resources of the plurality of systems to complete a flight task, thereby reducing waste of the network resources.

With reference to the eighth aspect or some implementations of the eighth aspect, in some other possible not claimed implementations of the eighth aspect, the sending module is further configured to: the first indication information indicates that the terminal cannot obtain the network service through any one of the plurality of systems. In the foregoing technical solution, no further attempt is made by the terminal to request to obtain the network service through any system, thereby avoiding a ping-pang phenomenon.

With reference to the eighth aspect or some implementations of the eighth aspect, in some other possible not claimed implementations of the eighth aspect, before determining the network capability information of the plurality of systems, the policy management function network element further includes: a receiving module, configured to receive a second message, where the second message is used to request the network capability information of the plurality of systems, and the second message includes the first area and/or the first time range; and the determining module is further configured to determine the network capability information of the plurality of systems based on the second message.

With reference to the eighth aspect or some implementations of the eighth aspect, in some other possible not claimed implementations of the eighth aspect, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

With reference to the eighth aspect or some implementations of the eighth aspect, in some other possible not claimed implementations of the eighth aspect, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

According to a ninth aspect, where the ninth aspect and any of its implementations and options below are not claimed, a session management function network element is provided, including: a receiving module, configured to receive first indication information, where the first indication information indicates whether a terminal can obtain a network service through a first system in at least one of a first area and a first time range; and a sending module, configured to send a third message to the terminal based on the first indication information, where the third message indicates whether the terminal is allowed to obtain the network service through the first system, the first area includes a planned flight area of the terminal, the first time range includes a planned flight time range of the terminal, the first system is one or more of a plurality of systems, the plurality of systems include a system that can be selected by the terminal, and the first system includes a system currently accessed by the terminal. In the foregoing technical solution, the first indication information indicates whether the terminal can obtain the network service through the first system, so that networked flight of an unmanned aerial vehicle can be efficiently and appropriately managed.

With reference to the ninth aspect, in some not claimed implementations of the ninth aspect, the sending module is specifically configured to: the third message indicates that the terminal is not allowed to obtain the network service through the first system.

With reference to the ninth aspect or some implementations of the ninth aspect, in some other possible not claimed implementations of the ninth aspect, the sending module is specifically configured to: the third message indicates that the terminal is redirected to a second system to obtain the network service, where the second system is one or more of the plurality of systems, and the first system and the second system have no intersection. According to the foregoing technical solution, the terminal can fully use network resources of the plurality of systems to complete a flight task, thereby reducing waste of the network resources.

With reference to the ninth aspect or some implementations of the ninth aspect, in some other possible not claimed implementations of the ninth aspect, the sending module is specifically configured to: the third message indicates that the terminal is not allowed to obtain the network service through any one of the plurality of systems. In the foregoing technical solution, no further attempt is made by the terminal to request to obtain the network service through any system, thereby avoiding a ping-pang phenomenon.

According to a tenth aspect, where the tenth aspect and any of its implementations and options below are not claimed, a service management function network element is provided, including: at least one processor, a memory, and a transceiver. The memory is configured to store instructions. The transceiver is used by the service management function network element to communicate with another device. The stored instructions are directly or indirectly executed by the at least one processor, so that the service management function network element is enabled to implement the method according to the first aspect or any optional implementation of the first aspect.

According to an eleventh aspect, where the eleventh aspect and any of its implementations and options below are not claimed, a policy management function network element is provided, including: at least one processor, a memory, and a transceiver. The memory is configured to store instructions. The transceiver is used by the policy management function network element to communicate with another device. The stored instructions are directly or indirectly executed by the at least one processor, so that the policy management function network element is enabled to implement the method according to the second aspect, the third aspect, or any optional implementation of the third aspect.

According to a twelfth aspect, where the twelfth aspect and any of its implementations and options below are not claimed, a session management function network element is provided, including: at least one processor, a memory, and a transceiver. The memory is configured to store instructions. The transceiver is used by the session management function network element to communicate with another device. The stored instructions are directly or indirectly executed by the at least one processor, so that the session management function network element is enabled to implement the method according to the fourth aspect or any optional implementation of the fourth aspect.

According to a thirteenth aspect, where the thirteenth aspect and any of its implementations and options below are not claimed, a chip system is provided, including at least one processor, where the at least one processor is configured to execute stored instructions, so that a service management function network element is enabled to implement the method according to any one of the first aspect or the optional implementations of the first aspect.

According to a fourteenth aspect, where the fourteenth aspect and any of its implementations and options below are not claimed, a chip system is provided, including at least one processor, where the at least one processor is configured to execute stored instructions, so that a policy management function network element is enabled to implement the method according to any one of the second aspect, the third aspect, or the optional implementations of the third aspect.

According to a fifteenth aspect, where the fifteenth aspect and any of its implementations and options below are not claimed, a chip system is provided, including at least one processor, where the at least one processor is configured to execute stored instructions, so that a session management function network element is enabled to implement the method according to any one of the fourth aspect or the optional implementations of the fourth aspect.

According to a sixteenth aspect, where the sixteenth aspect and any of its implementations and options below are not claimed, a computer storage medium is provided. The computer storage medium stores program instructions, and when the instructions are executed, a service management function network element is enabled to implement the method according to any one of the first aspect or the optional implementations of the first aspect.

According to a seventeenth aspect, where the seventeenth aspect and any of its implementations and options below are not claimed, a computer storage medium is provided. The computer storage medium stores program instructions. When the instructions are executed, a policy management function network element is enabled to implement the method according to any one of the second aspect, the third aspect, or the optional implementations of the third aspect.

According to an eighteenth aspect, where the eighteenth aspect and any of its implementations and options below are not claimed, a computer storage medium is provided. The computer storage medium stores program instructions. When the instructions are executed, a session management function network element is enabled to implement the method according to any one of the fourth aspect or the optional implementations of the fourth aspect.

According to a nineteenth aspect, where the nineteenth aspect and any of its implementations and options below are not claimed, a computer program product is provided. The computer program product includes instructions, and when the instructions are executed, a service management function network element is enabled to implement the method according to any one of the first aspect or the optional implementations of the first aspect.

According to a twentieth aspect, where the twentieth aspect and any of its implementations and options below are not claimed, a computer program product is provided. The computer program product includes instructions, and when the instructions are executed, a policy management function network element is enabled to implement the method according to any one of the second aspect, the third aspect, or the optional implementations of the third aspect.

According to a twenty-first aspect, where the twenty-first aspect and any of its implementations and options below are not claimed, a computer program product is provided. The computer program product includes instructions. When the instructions are executed, a session management function network element is enabled to implement the method in any one of the fourth aspect or the optional implementations of the fourth aspect.

According to a twenty-second aspect according to the invention, the invention also provides a system. This system includes the service management function network element according to any one of the first aspect or the optional implementations of the first aspect; and/or the policy management function network element according to any one of the second aspect, the third aspect, or the optional implementations of the third aspect; and/or the session management function network element according to any one of the fourth aspect or the optional implementations of the fourth aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of an architecture of a network system according to an embodiment of this application;
FIG. 2 is a schematic diagram of an application scenario according to an embodiment of this application;
FIG. 3 is a schematic diagram of a communication method according to an embodiment of this application;
FIG. 4 is a schematic diagram of another communication method according to an embodiment of this application;
FIG. 5 is a schematic diagram of another communication method according to an embodiment of this application;
FIG. 6 is a schematic diagram of a communication method according to an embodiment of this application;
FIG. 7 is a schematic block diagram of a service management function network element according to an embodiment of this application;
FIG. 8 is a schematic block diagram of a policy management function network element according to an embodiment of this application;
FIG. 9 is a schematic block diagram of a session management function network element according to an embodiment of this application; and
FIG. 10 is a schematic block diagram of a communication device according to an embodiment of this application.

### DESCRIPTION OF EMBODIMENTS

The following describes technical solutions in this application with reference to the accompanying drawings.

The technical solutions in embodiments of this application may be applied to various communication systems, for example, a global system of mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR), or the like.

The terminal device in embodiments of this application may communicate with another terminal by using an access network (access network, AN) device and a core network (core network, CN). A terminal device in embodiments of this application may be an unmanned aerial vehicle (unmanned aerial vehicle, UAV), or may be user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

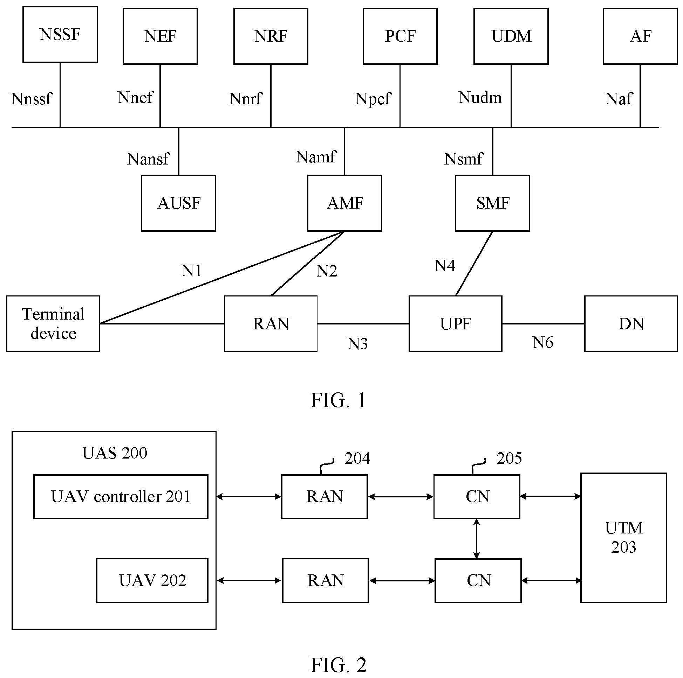

FIG. 1 is a schematic block diagram of an architecture of a wireless communication system applied to this application. As shown in FIG. 1, the architecture of the system includes a terminal device, a radio access network (radio access network, RAN) device, a core network device, and a data network (data network, DN). The architecture is represented in a service-based (service-based) form. The terminal device in FIG. 1 may be configured to connect, through a radio air interface, to the radio access network device deployed by an operator, and then connect to the data network through the core network device. The radio access network device is mainly configured to implement functions such as a wireless physical layer function, resource scheduling, radio resource management, radio access control, and mobility management. The core network device (which may also be referred to as a management device) is mainly configured to perform device registration, security authentication, mobility management, location management, and the like for the terminal device. It should be noted that FIG. 1 is merely a diagram of an example architecture. In addition to the function units shown in FIG. 1, the network architecture may further include another function unit or function network element. This is not limited in this embodiment of this application. FIG. 1 is based on a 5G system architecture, or may be based on another system architecture, for example, an LTE system. This is not limited in this embodiment of this application.

The terminal device shown in FIG. 1 may be any one of the foregoing possible terminal devices, for example, may be a mobile phone, a computer, a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communication device, a handheld computing device, a satellite wireless device, a wireless modem card, set top box (set top box, STB), customer premise equipment (customer premise equipment, CPE), and/or another device for communicating over a wireless system. The foregoing radio access network device may be an access network (access network, AN)/a radio access network (radio access network, RAN) device, and is a network including a plurality of 5G-AN/5G-RAN nodes. The 5G-AN/5G-RAN node may be: an access point (access point, AP), a next generation base station (NR NodeB or gNB), a gNB with a central unit (central unit, CU) and a distributed unit (distributed unit, DU) that are separated, a transmission reception point (transmission reception point, TRP), a transmission point (transmission point, TP), or another access node.

As shown in FIG. 1, the core network device may include a unified data management (unified data management, UDM) network element, an access and mobility management function (access and mobility management function, AMF) network element, a session management function (session management function, SMF) network element, a policy control function (policy control function, PCF) network element, an application function (application function, AF) network element, a user plane function (user plane function, UPF) network element, a network exposure function (network exposure function, NEF) network element, a network repository function (network repository function, NRF) network element, a network slice selection function (network slice selection function, NSSF) network element, an authentication server function (authentication server function, AUSF) network element, and the like. These function units may work independently, or may be combined to implement some control functions. For example, the AMF, the SMF, and the PCF may be combined to serve as a management device configured to implement access control and mobility management functions, such as access authentication of the terminal device, security encryption, and location registration, session management functions such as establishing, releasing, and changing a user plane transmission path, and a function of analyzing slice (slice)-related data (for example, congestion) and data related to the terminal device.

In the 5G network shown in FIG. 1, a connection may be established between function units through a next generation network (next generation, NG) interface to implement communication. For example, the terminal device establishes an air interface connection to the RAN device through a new radio (new radio, NR) interface for transmitting user plane data and control plane signaling. The terminal device may establish a control plane signaling connection to the AMF through an NG interface 1 (N1 for short). The RAN device may establish a user plane data connection to an offloading point UPF through an NG interface 3 (N3 for short). The RAN device may establish a control plane signaling connection to the AMF through an NG interface 2 (N2 for short). The UPF may exchange user plane data with the data network through an NG interface 6 (N6 for short). Each core network element can communicate with another core network element through a corresponding interface. For example, another core network element may communicate with the NSSF through an Nnssf interface, and another core network element may communicate with the NEF through an Nnef interface.

It should be noted that the part shown in FIG. 1 is merely a diagram of an example architecture. In addition to the function units shown in the part shown in FIG. 1, the network architecture may further include another function unit or function network element. This is not limited in this embodiment of this application.

It should be understood that a name of an interface between network elements in this application is merely an example, and the interface between the network elements may alternatively have another name. A name of an interface is not limited in embodiments of this application.

It should be further understood that the radio access network device in this embodiment of this application may be a device configured to communicate with the terminal apparatus and the core network device, and the radio access network device may be a base station (base transceiver station, BTS) in a global system of mobile communication (global system of mobile communication, GSM) or code division multiple access (code division multiple access, CDMA), or may be a base station (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario, or the access network device may be a relay station, an access point, a vehicle-mounted device, a wearable device, a network device in a 5G network, an access network device in a future evolved PLMN network, or the like. This is not limited in this embodiment of this application.

An unmanned aerial system (unmanned aerial system, UAS) consists of an unmanned aerial vehicle controller and an unmanned aerial vehicle. Due to a feature of using air space of the unmanned aerial vehicle, an administration department needs to perform timely identification and control. The 3rd generation partnership project (3rd generation partnership project, 3GPP) network introduces a new entity, that is, an unmanned aerial system traffic management (unmanned aerial system traffic management, UTM) entity. The UTM may store data related to the unmanned aerial vehicle controller and the unmanned vehicle, such as identification information, owner information, path information, a current location, and an operating status. The UTM may be used for pairing the unmanned vehicle controller with the unmanned vehicle, identifying the unmanned aerial system, authorizing an operation on the unmanned aerial system, and may further manage and intervene communication between the unmanned vehicle controller and the unmanned vehicle. It should be understood that the unmanned aerial system traffic management entity may have another name, a deployment manner, and the like are not limited in this application.

FIG. 2 is a schematic diagram of an application scenario according to an embodiment of this application. As shown in FIG. 2, an unmanned aerial system 200 may perform information exchange and wireless communication with a network system having an unmanned aerial system traffic management UTM entity 203. For example, an unmanned aerial vehicle controller 201 or an unmanned aerial vehicle 202 may exchange information with an access network (radio access network, RAN) 204 and a core network (core network, CN) 205, or may exchange information with the UTM 203 through an access network 204 or the core network 205. The unmanned aerial vehicle controller 201 may further exchange information with an unmanned aerial vehicle 202 through the access network 204 or the core network 205, or may exchange information with the unmanned aerial vehicle 202 through the UTM 203.

It should be understood that the unmanned aerial vehicle controller 201 and the unmanned aerial vehicle 202 may be located in a same access network or core network, or may be located in different access networks or core networks. This is not limited in embodiments of this application.

The unmanned aerial vehicle UAV 202, also referred to as a drone or an air robot, is unmanned aircraft that uses a radio remote control device and a self-provided program control apparatus, and can complete a flight task and various load tasks when the aircraft is unmanned. The unmanned aerial vehicle in embodiments of this application may be an unmanned helicopter, a fixed-wing aircraft, a multi-rotor aircraft, an unmanned airship, or an unmanned parawing; may include a near-space aircraft, for example, a stratospheric airship, a high-altitude balloon, a solar-powered unmanned aerial vehicle, or the like; and may be in a form of a four-axis unmanned aerial vehicle, a six-axis unmanned aerial vehicle, a single-axis unmanned aerial vehicle, an unmanned aerial vehicle under vector control, or the like. The unmanned aerial vehicle in embodiments of this application may be used in fields such as military affairs, industry, civil affairs, agriculture, construction, film industry, and environmental protection, and special industries that require operation of unmanned aerial vehicle. For example, unmanned aerial vehicles may be used for military reconnaissance, patrol, aerial photography, environment monitoring, border monitoring, express delivery, power inspection, land right confirmation, flood and drought management, and post-disaster recovery. This is not limited in embodiments of this application.

It should be understood that a specific type of the unmanned aerial vehicle is not limited in this specification. With the development of intelligence, when application scenarios are different or flight tasks are different, names of devices having unmanned aerial vehicle functions may be different. For ease of description, in all embodiments of this application, the foregoing apparatuses having the unmanned aerial vehicle functions are collectively referred to as the unmanned aerial vehicle.

The unmanned aerial vehicle 202 may be equipped with a plurality of sensors or function modules, such as a gyroscope (flight posture sensing), an accelerometer, a geomagnetic induction, a barometric pressure sensor (rough control of a hovering height), an ultrasonic sensor (accurate low altitude height control or obstacle avoidance), an optical flow sensor (accurate determining of a horizontal hovering position), a global positioning system (global positioning system, GPS) module (rough positioning of a height of a horizontal position), a control circuit, and a compass, to collect an angular rate, a posture, a position, an acceleration, a height, an air velocity, and the like of the unmanned aerial vehicle, so that a normal flight posture of the unmanned aerial vehicle can be automatically maintained.

It should be understood that names of the modules or the hardware configured for the unmanned vehicle are merely examples. In a specific implementation, each function module may have another name. This is not limited in embodiments of this application. The unmanned aerial vehicle in this embodiment of this application may have more or fewer function modules, or may implement more or fewer functions. This is not limited in this embodiment of this application.

The unmanned aerial vehicle controller (UAV controller, UAVC) 201 is configured to control the unmanned aerial vehicle 202, for example, control a flight status or a flight action of the unmanned aerial vehicle. The unmanned aerial vehicle controller may be a smartphone, a tablet, a laptop, a smart watch, a smart remote control, a conventional remote control, a dedicated remote controller, or the like, or may be an apparatus that can be used to control an unmanned aerial vehicle by using a gesture, such as a wristband, a finger ring, a glove, an armband, or a watch, or may be a head-mounted device, for example, a hood, that can be used to control an unmanned aerial vehicle with thoughts, or may be an apparatus that can be used to control an unmanned aerial vehicle with user's body movement, such as a smart jacket or coat.

It should be understood that a specific type of the unmanned aerial vehicle controller is not limited in this specification. With the development of intelligence, a name and a form of a device having functions of the unmanned aerial vehicle controller may change. For ease of description, in all embodiments of this application, the foregoing apparatuses having functions of the unmanned aerial vehicle controller are collectively referred to as an unmanned aerial vehicle controller.

The unmanned aerial vehicle controller 201 may control the flight status of the unmanned aerial vehicle 202. For example, the unmanned aerial vehicle controller may control a direction, an aileron, lifting, tilting, a speed, a throttle, a flap, and the like of the unmanned aerial vehicle, and may further control actions such as turning, climbing, diving, rolling, hovering, takeoff, landing, and the like of the unmanned aerial vehicle. This is not limited in this embodiment of this application.

It should be further understood that the unmanned aerial system 200 may include one or more unmanned aerial vehicle controllers 201 and one or more unmanned aerial vehicles 202. For example, one unmanned aerial vehicle controller may control one or more unmanned aerial vehicles, one unmanned aerial vehicle may also be controlled by one or more unmanned aerial vehicle controllers, and a plurality of unmanned aerial vehicle controllers may also cooperatively control a plurality of unmanned aerial vehicles. This is not limited in this embodiment of this application.

The unmanned aerial vehicles 202 in the unmanned aerial system 200 may be of one or more types mentioned above, and the unmanned aerial vehicle controllers 201 may also be of one or more types mentioned above. This is not limited in this embodiment of this application.

To facilitate understanding of embodiments of this application, the following first briefly describes concepts used in this application.

C2 communication is transmitting, from a UAV controller or a UTM to a UAV, a message carrying a command and control information that are for an UAV operation, or reporting telemetry data from a UAV to a UAV controller or a UTM through a user plane link. In other words, C2 communication is communication between the UAV and the UAVC. The networked UAV flight indicates that a C2 communication session is established, and the UAVC can control the UAV to perform a UAV operation through the session.

Network capability information is information about a capability of a plurality of systems to provide a network service for a terminal in a first area and/or a first time range. The network capability information may be information about whether a network can meet a networking requirement of a terminal at a specified time and place, for example, information indicating whether network coverage exists or not at a specified time and place, whether a terminal is allowed to become networked to perform a corresponding operation, or the like. The network capability information may also be referred to as mobility restriction information, network mobility restriction information, or the like. This is not limited in this application.

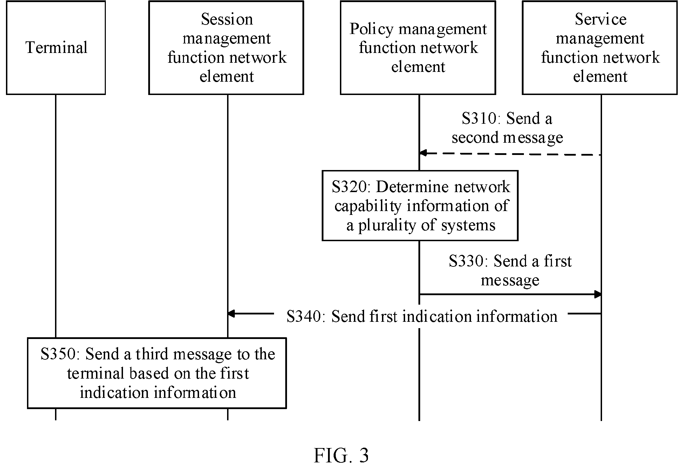

With reference to FIG. 3, the following describes in detail a method for unmanned aerial vehicle networking management provided in this application. FIG. 3 is a schematic flowchart of the method for unmanned aerial vehicle networking management according to an embodiment of this application. The method may be applied to the scenario shown in FIG. 2, and may also be applied to another communication scenario. This is not limited in this embodiment of this application.

In S310, a service management function network element sends a second message to a policy management function network element.

The service management function network element is a network element configured to provide a service for an unmanned aerial vehicle. For example, the service management function network element may be a UTM network element or an unmanned aerial system service supplier (UAS service supplier, USS) network element. The policy management function network element is a network element configured to provide functions such as providing a policy rule. For example, in the 4th generation (4th generation, 4G), the policy management function network element may be a policy and charging rules function (policy and charging rules function, PCRF) network element, and in 5G, the policy management function network element may be a PCF network element.

The service management function network element sends the second message to the policy management function network element. Correspondingly, the policy management function network element receives the second message from the service management function network element, and the second message is used to request network capability information of a plurality of systems. Specifically, the second message includes a first area and/or a first time range. It should be understood that the first area includes a planned flight area of a terminal, for example, a departure place, a destination, and a waypoint, and the first time range includes a planned flight time range of the terminal, for example, a takeoff time and a landing time. This is not limited in embodiments of this application.

It should be understood that the second message may be new content added to an existing message, or may be a message of a new type. For example, the second message may be a network capability subscription message or a network capability request message. A form of the message is not limited in this embodiment of this application.

It should be further understood that the second message may be directly sent by the service management function network element to the policy management function network element, or may be sent by another network element. For example, the second message may be first sent by the service management function network element to another network element, and then sent by the another network element to the policy management function network element. How to send the second message is not limited in this embodiment of this application.

It should be further understood that the another network element herein may be a network exposure network element or another core network element. This is not limited in this embodiment of this application.

It should be noted that the network exposure network element is a network element configured to transmit internal and external information. For example, in 4G, the network exposure network element may be a service capability exposure function (service capability exposure function, SCEF) network element. In 5G, the network exposure network element may be a network exposure function network element, or may be an unmanned aerial vehicle flight enablement subsystem (UAV flight enablement subsystem, UFES) network element. This is not limited in this embodiment of this application.

In a possible implementation, the second message may be a converted message. Specifically, the network exposure network element converts location information represented in a geographical form in the second message into location information represented in a form of a cell identifier or a tracking area identifier list, and then sends the second message with the location information represented in the form of the cell identifier or the tracking area identifier list to the policy management function network element. It should be understood that the network exposure network element may not convert the location information, but directly forward, to the policy management function network element, the second message with the location information represented in the geographical form. This is not limited in this embodiment of this application.

It should be further understood that step S310 is an optional step. It may be understood that the service management function network element may not request the network capability information of the plurality of systems from the policy management function network element.

In S320, the policy management function network element determines the network capability information of the plurality of systems.

The plurality of systems are systems that can be selected by the terminal, for example, a 5GS or an EPS. The plurality of systems further includes a system currently accessed by the terminal. Specifically, the policy management function network element may have a mobility restriction information list that is in the plurality of systems and that is used to protect another terminal in a network from interference from a terminal operation (for example, an operation related to an unmanned aerial vehicle). For example, UAV connections used for C2 communication during flight in some areas are not preferred or need to be forbidden. The mobility restriction information list herein may include information about an area in which the terminal is allowed to obtain a network service through a network or information about an area in which the terminal is not allowed to obtain a network service through a network. In addition, the mobility restriction information list may further include time information, that is, a time range in which the terminal is allowed or not allowed to obtain a network service through a network. In addition, the mobility restriction information list may further include a condition of network coverage in the plurality of systems, for example, whether network coverage used to provide a network service for C2 communication exists or not in some areas. In addition, the mobility restriction information list may further include time information, that is, whether network coverage providing a network service for C2 communication exists or not within a time range. Therefore, the policy management function network element can determine the network capability information of the plurality of systems based on flight path information of the terminal.

It should be understood that the plurality of systems may be 5GS systems or EPS systems, or may be other systems. This is not limited in embodiments of this application.

It should be further understood that the network capability information may be an identifier of a tracking area/an identifier list of cells (which may include time information, that is, a time range in which the terminal is allowed or not allowed to obtain a network service), where the terminal is allowed or not allowed to obtain a network service in the tracking area or the cells; or the network capability information may be an identifier of a tracking area/an identifier list of cells (which may include time information, that is, a time range in which network coverage providing the network service for C2 communication exists or does not exist), where network coverage providing the network service for C2 communication exists or does not exist in the tracking area or the cells. In addition to the area information, the network capability information may further include height information. The network capability information includes but is not limited to the network coverage and mobility restriction information. This is not limited in this embodiment of this application.

In S330, the service management function network element receives a first message from the policy management function network element.

Specifically, the policy management function network element determines the network capability information of the plurality of systems based on a flight path of the terminal, and sends the first message to the service management function network element, where the first message includes the network capability information of the plurality of systems. Correspondingly, the service management function network element receives the first message from the policy management function network element.

It should be understood that, the first message may be directly sent by the policy management function network element to the service management function network element, or may be sent by the policy management function network element to another network element, and then forwarded by the another network element to the service management function network element. A manner of sending the first message is not limited herein in this application. The another network element herein is similar to the another network element in S310. Details are not described herein again.

In a possible implementation, the first message may be a converted message. Specifically, the network exposure network element converts location information that is in a form of a cell identifier or a tracking area identifier list and that is in the first message into location information in a geographical form, and then sends the first message including the location information in the geographical form to the service management function network element. It should be understood that the network exposure network element may not convert the location information, but directly forward, to the service management function network element, the first message including the location information in the form of a cell identifier or a tracking area identifier list. This is not limited in this embodiment of this application.

It should be understood that, when the policy management function network element directly sends the first message to the service management function network element, the policy management function network element may convert the location information represented in the form of a cell identifier or a tracking area identifier list into the location information represented in the geographical form, and then send the first message including the location information represented in the geographical form to the service management function network element. It should be further understood that the policy management function network element may not convert the location information, and directly forward, to the service management function network element, the first message including the location information in the form of a cell identifier or a tracking area identifier list. This is not limited in this embodiment of this application.

In S340, the service management function network element sends first indication information to a session management function network element.

The session management function network element is a network element configured to manage terminal communication. For example, in 4G, the session management function network element may be a mobility management entity (mobility management entity, MME) network element or a packet data network gateway for control plane (packet data network gateway for control plane, PGW-C). In 5G, the session management function network element may be an SMF network element or an AMF network element. This is not limited in this embodiment of this application.

Specifically, the service management function network element sends the first indication information to the session management function network element. Correspondingly, the session management function network element receives the first indication information from the service management function network element. The first indication information indicates whether the terminal can obtain a network service through the plurality of systems.

In a possible implementation, after receiving the network capability information of the plurality of systems on the flight path of the terminal, the service management function network element determines, based on a situation in which network capability information of at least one first system in the plurality of systems does not support C2 communication on the flight path, that the terminal cannot obtain the network service through the first system. In this case, the first indication information is sent to the session management function network element, where the first indication information indicates that the terminal cannot obtain the network service through the first system.

It should be noted that, not supporting C2 communication on the flight path means that the first system cannot provide a network service required by C2 communication or the like during flight of the terminal in a planned flight area and/or a planned flight time range of the terminal. For example, the first system is not allowed to provide the network service required by C2 communication or the like during flight of the terminal in the planned flight area and/or the planned flight time range of the terminal, or network coverage providing the network service required by C2 communication or the like during flight of the terminal in the planned flight area and/or the planned flight time range of the terminal does not exist in the first system. It should be further understood that, not supporting C2 communication herein may mean that C2 communication is not supported in some part. For example, the first system cannot provide the network service required by C2 communication during flight of the terminal in a part of a planned flight area and/or a part of planned flight time of the terminal. This is not limited in this embodiment of this application. The following scenarios in which C2 communication is not supported or supported are based on the foregoing understanding. Details are not described herein again.

In another possible implementation, after receiving the network capability information of the plurality of systems on the flight path of the terminal, the service management function network element determines, based on a situation in which network capability information of at least one first system in the plurality of systems does not support C2 communication on the flight path, that the terminal cannot obtain the network service through the first system, but network capability information of a second system in the plurality of systems supports C2 communication on the flight path, where the first system and the second system have no intersection. In this case, the first indication information is sent to the session management function network element, where the first indication information indicates that the terminal can obtain the network service through the second system.

In another possible implementation, after receiving the network capability information of the plurality of systems on the path of the terminal, the service management function network element determines, based on a situation in which network capability information of any one of the plurality of systems does not support C2 communication on the flight path, that the terminal cannot obtain the network service through any system. In this case, the first indication information is sent to the session management function network element, where the first indication information indicates that the terminal cannot obtain the network service through any one of the plurality of systems.

In a possible implementation, the service management function network element determines, based on the received network capability information of the plurality of systems, that network capabilities of some cells or some tracking areas on the flight path of the terminal do not support C2 communication, but some cells or some tracking areas that support C2 communication on the flight path of the terminal can support flight of the terminal. For example, cells or tracking areas with a network capability that support C2 communication are connected. In this case, the service management function network element considers that the UAV can complete a flight task while bypassing some geographical locations or areas that do not support C2 communication. It should be noted that, the service management function network element may determine, based on a local configuration, whether the unmanned aerial vehicle can complete networked flight when network capabilities of some cells or some tracking areas do not support C2 communication.

In another possible implementation, the service management function network element may further indicate a preferred system to the network exposure function network element. For example, if a network capability in the 5GS supports C2 communication, but a network capability in the EPS does not support C2 communication, the service management function network element indicates that the 5GS is preferred. However, the network exposure network element can perceive a system currently accessed by the UAV. For example, if the UAV currently accesses the 5GS, the network exposure network element sends, to the session management function network element, information indicating support by the network capability, to indicate that the network capability can support the terminal in obtaining the network service through a current system. Otherwise, the network exposure network element sends redirection indication information to the session management function network element.

In another possible implementation, if the network exposure network element does not perceive the system currently accessed by the UAV, the preferred system is sent to another network element. This is not limited in embodiments of this application.

In another possible implementation, the first indication information may alternatively be the network capability information. For example, after receiving the network capability information on the flight path of the terminal, the service management function network element may directly send the network capability information of the plurality of systems to the session management function network element. The session management function network element determines, based on the network capability information of the plurality of systems, to send the first indication information. Details are not described herein in this application.

It should be noted that the first indication information may alternatively be sent by the policy management function network element to the session management function network element. Specifically, the policy management function network element determines the network capability information of the plurality of systems, and determines, based on whether the network capability information of the plurality of systems supports C2 communication on the flight path, to send the first indication information to the session management function network element. This is not limited in embodiments of this application.

In a possible implementation, the policy management function network element determines, based on a situation in which network capability information of at least one first system in the plurality of systems does not support C2 communication on the flight path, that the terminal cannot obtain the network service through the first system, where the first system is a system currently accessed by the terminal. In this case, the first indication information is sent to the session management function network element, where the first indication information indicates that the terminal cannot obtain the network service through the first system.

In another possible implementation, the policy management function network element determines, based on a situation in which network capability information of at least one first system in the plurality of systems does not support C2 communication on the flight path, that the terminal cannot obtain the network service through the first system, where the first system is a system currently accessed by the terminal. However, network capability information of a second system in the plurality of systems supports C2 communication on the flight path, and the first system and the second system have no intersection. In this case, the first indication information is sent to the session management function network element, where the first indication information indicates that the terminal is redirected to the second system to obtain the network service.

In another possible implementation, the policy management function network element determines, based on a situation in which network capability information of any one of the plurality of systems does not support C2 communication on the flight path, that the terminal cannot obtain the network service through any system. In this case, the policy management function network element sends the first indication information to the session management function network element, where the first indication information indicates that the terminal cannot obtain the network service through any system.

It should be understood that, alternatively, the policy management function network element may directly send the network capability information of the plurality of systems to the session management function network element, and the session management function network element determines, based on the network capability information of the plurality of systems, to send the first indication information. Details are not described herein in this application.

In another possible implementation, the policy management function network element may also determine, based on the received network capability information of the plurality of systems, that flight can be completed even if network capabilities of some cells or some tracking areas on the flight path of the terminal do not support C2 communication. For example, a path may be set between any start point and any destination of the flight, and network capabilities supports cells or tracking areas on the path. It should be understood that the policy management function network element may determine, based on a local configuration or an indication from the service management function network element, whether the unmanned aerial vehicle can complete networked flight when network capabilities of some cells or tracking areas do not support C2 communication.

In S350, the session management function network element sends a third message to the terminal based on the first indication information.

Specifically, the session management function network element sends the third message to the terminal based on the received first indication information. Correspondingly, the terminal receives the third message. The third message may be a session establishment/modification acceptance message, a session establishment/modification rejection message, a connection establishment/modification acceptance message, a connection establishment/modification rejection message, a session release message, or a connection release message, or may be a message of another type. This is not limited in this embodiment of this application. It should be understood that the first indication information may be sent by the service management function network element or the policy management function network element. A source of the first indication information is not limited herein in this embodiment of this application.

It should be noted that the session and the connection herein respectively refer to a protocol data unit (protocol data unit, PDU) session in the 5GS and a packet data network (packet data network, PDN) connection in the EPS. The session or connection may be used for C2 communication, that is, communication between the UAV and the UAVC.

It should be understood that the third message may carry a cause value, and the cause value may correspond to nonsupport by a network capability or a redirection indication. The following separately describes cases corresponding to the two different cause values.

The following describes a case in which the cause value is nonsupport by a network capability.

In a possible implementation, the first indication information received by the session management function network element indicates that the terminal cannot obtain the network service through the first system. In this case, the session management function network element sends the third message to the terminal. A corresponding cause value in the third message is nonsupport by a network capability, and the cause value may also indicate a system that is not supportive, that is, indicate that the first system is not supportive. It should be understood that, the first system includes a system currently accessed by the terminal. In this case, the terminal does not make further attempt to establish, in the first system, a session used for C2 communication with the UAVC.

In another possible implementation, the first indication information received by the session management function network element indicates that the terminal cannot obtain the network service through any one of the plurality of systems. The session management function network element sends the third message to the terminal, where the corresponding cause value in the third message is nonsupport by a network capability, and the cause value may also indicate that no further attempt is made to obtain the network service from the current system and other systems. In this case, the terminal does not make further attempt to establish, in any system, a session used for C2 communication with the UAVC.

The following describes a case in which the cause value is the redirection indication.

In a possible implementation, the first indication information received by the session management function network element indicates that the terminal cannot obtain the network service through the first system, but can obtain the network service through the second system, where the first system includes a system currently accessed by the terminal. In this case, the session management function network element sends the third message to the terminal, and the corresponding cause value in the third message is the redirection indication. In this case, the terminal may take a plurality of measures to leave a current system, and is redirected to a system indicated by the redirection indication, that is, the terminal is redirected to the second system. In this scenario, the cause value may directly indicate the second system for redirection, where the second system includes one or more systems. Alternatively, the cause value may not directly indicate the second system for redirection. It should be understood that this is not limited in this embodiment of this application. For example, if the cause value indicates redirection to the EPS, the terminal leaves a current system and is redirected to the EPS.

It should be noted that a manner in which the terminal leaves the current system may include manners such as disabling an N1 mode capability, deregistration, disabling an E-UTRA capability, and detaching. It should be understood that this is not limited in this embodiment of this application.

In another possible implementation, when a network capability is not supportive, the session management function network element may provide a timer. The timer may include a system that the terminal currently attempts to access. When the timer times out, the terminal may attempt to establish, in the system, a session used for C2 communication with the UAVC again.

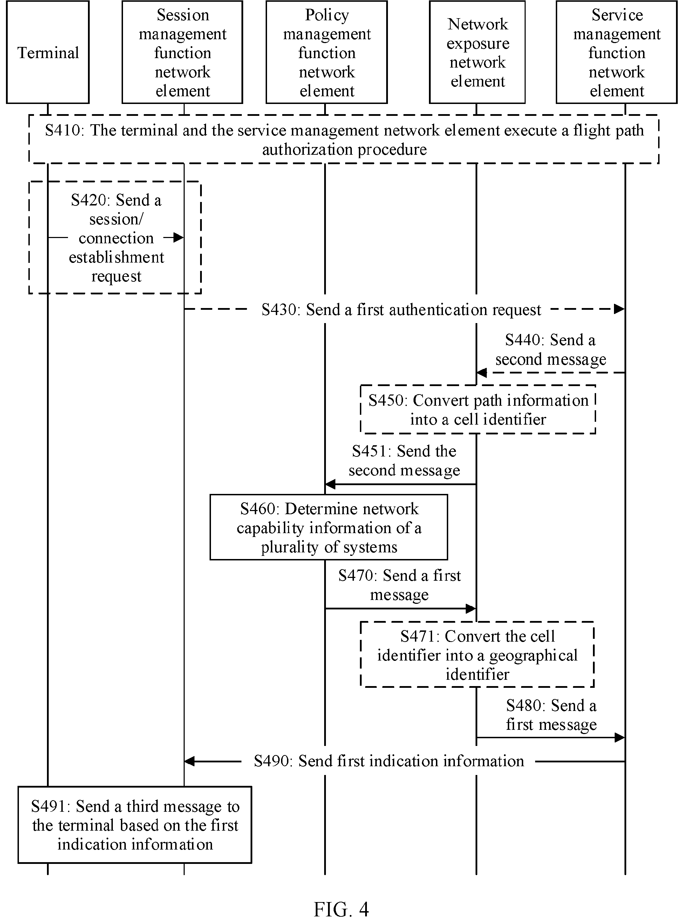

With reference to FIG. 4 to FIG. 6, the following describes in detail a communication management method according to an embodiment of this application. FIG. 4 is a schematic flowchart of a communication management method according to an embodiment of this application. As shown in FIG. 4, the method includes the following steps.

In S410, a terminal and a service management function network element execute a flight path authorization procedure.

Specifically, the terminal sends a planned flight path of a UAV to the service management function network element in the authorization procedure. In a process of flight path authorization, the service management function network element obtains information such as the planned flight path and planned time of the UAV. It should be understood that flight path authorization may be performed in a plurality of manners, for example, flight path authorization may be performed in a control plane or a user plane, or may be offline authorization, or the like. A specific manner of flight path authorization is not limited herein in this embodiment of this application.

It should be understood that S410 is an optional step.

In S420, a session management function network element receives a session/connection establishment request from the terminal.

Specifically, the UAV initiates a session/connection establishment procedure, where a session/connection herein may be a session/connection used for C2 communication. It should be understood that the session establishment procedure or the connection establishment procedure may also be a session modification procedure or a connection modification procedure, and corresponding establishment request/establishment acceptance/establishment rejection may be modification request/modification command/modification rejection. This is not limited in this embodiment of this application.

In S430, the session management function network element sends a first authentication request to the service management function network element.

Correspondingly, the service management function network element receives the first authentication request from the session management function network element, where the first authentication request may be an authentication/authorization request.

It should be understood that the first authentication request may be directly sent by the session management function network element to the service management function network element, or may be sent by the session management function network element to another network element, and then forwarded by the another network element to the service management function network element. A manner of sending a first message is not limited herein in this application.

In a possible implementation, it should be noted that if step S410 is performed, flight path information is not included in S420 and S430, and the first authentication request is used only for an authorization request of C2 communication.

In another possible implementation, it should be noted that, if step S410 is not performed, the flight path information is included in S420 and S430, and the first authentication request is used for the authorization request of C2 communication, and is also used for a flight path authorization request. A specific authorization manner is not described herein again.

In another possible implementation, steps S420 and S430 may not be performed.

In another possible implementation, steps S420 and S430 may alternatively be performed after step S480 and before step S490. It should be understood that an execution sequence of the steps is not limited herein in this embodiment of this application.

In S440, the service management function network element sends a second message to a network exposure network element.

Specifically, the second message is used to request network capability information of a plurality of systems. Specifically, the second message includes a first area and/or a first time range. It should be understood that the first area includes a planned flight area of a terminal, for example, a departure place, a destination, and a waypoint, and the first time range includes a planned flight time range of the terminal, for example, a takeoff time and a landing time. This is not limited in this embodiment of this application.

It should be understood that the second message may be new content added to an existing message, or may be a message of a new type. For example, the second message may be a network capability subscription message or a network capability request message. A form of the message is not limited in this embodiment of this application.

In S450, the network exposure network element converts location information represented in a geographical form into location information represented in a form of a cell identifier or a tracking area identifier list.

Specifically, the network exposure function network element converts the location information represented in the geographical form in the second message into the location information represented in the form of a cell identifier or a tracking area identifier list, and then sends the converted second message to a policy management function network element.

It should be understood that S450 is an optional step. It may be understood that the network exposure function network element may not convert the location information, but directly forward the second message including the location information represented in the geographical form to the policy management function network element. This is not limited in this embodiment of this application.

In S451, the network exposure network element sends the second message to the policy management network element.

It should be noted that if step S450 is performed, the location information in the second message exists in the form of a cell identifier or a tracking area identifier list, and the network exposure network element sends the converted second message to the policy management function network element. If S450 is not performed, the location information in the second message exists in the geographical form, and the network exposure network element forwards the unconverted second message to the policy management function network element.

It should be understood that the second messages in step S440 and step S451 may be of a same message type, or may be of different message types. When message types are different, the network exposure network element puts content in the received second message in a message of another type (also referred to as the second message herein), and sends the message to the policy management function network element.

In S460, the policy management function network element determines the network capability information of the plurality of systems.

The policy management function network element may determine the network capability information of the plurality of systems after receiving the second message, or may determine the network capability information of the plurality of systems when the policy management function network element does not receive the second message. This is not limited in this embodiment of this application.

In a possible implementation, after receiving the session/connection establishment request from the terminal, the session management function network element requests policy information from the policy management function network element, to trigger the policy management function network element to determine the network capability information of the plurality of systems.

In S470, the network exposure network element receives a first message from the policy management function network element.

In S471, the network exposure network element converts the location information represented in the form of a cell identifier or a tracking area identifier list into the location information represented in the geographical form.

It should be understood that S471 is an optional step. It may be understood that the network exposure network element may not convert the location information, but directly forward the first message including the location information represented in the geographical form to the service management function network element. This is not limited in this embodiment of this application.

In S480, the service management function network element receives the first message forwarded by the network exposure network element, where the first message includes network capability information of the plurality of systems. Correspondingly, the first messages in S470 and S480 may be messages of a same type, or may be messages of different types. This is described in step S451. Details are not described herein again.

It should be noted that, descriptions of corresponding steps of S460 to S480 are similar to descriptions of S320 and S330. Details are not described herein again.

In S490, the service management function network element sends the first indication information to the session management function network element.

It should be noted that, descriptions of a corresponding step of S490 are similar to descriptions of S340. Details are not described herein again.

In S491, the session management function network element sends a third message to the terminal based on the first indication information.

Specifically, the third message may be a session/connection establishment rejection message, a session/connection establishment acceptance message, a session/connection modification command message, a session/connection modification rejection message, a session/connection release message, or the like. It should be understood that this is not limited in this embodiment of this application.

In a possible implementation, if the first indication information indicates that the terminal cannot obtain a network service through a first system, and step S420 is performed, the session management function network element sends a session/connection establishment rejection message (that is, the third message) to the terminal. The message carries a cause value corresponding to nonsupport by a network capability, and the cause value may also indicate a system that is not supportive, that is, indicate that the first system is not supportive.

In another possible implementation, if the first indication information indicates that the terminal cannot obtain the network service through the first system, and step S420 is not performed, the session management function network element sends a session/connection establishment release message (that is, the third message) to the terminal. The message carries a cause value corresponding to nonsupport by a network capability, and the cause value may also indicate a system that is not supportive, that is, indicate that the first system is not supportive.

In another possible implementation, if the first indication information indicates that the terminal cannot obtain the network service through any one of the plurality of systems, and step S420 is performed, the session management function network element sends a session/connection establishment rejection message (that is, the third message) to the terminal. The message carries a cause value corresponding to nonsupport by a network capability, and the cause value may also indicate that no further attempt is made to obtain the network service from the current system and other systems.

In another possible implementation, if the first indication information indicates that the terminal cannot obtain the network service through any one of the plurality of systems, and step S420 is not performed, the session management function network element sends a session/connection establishment release message (that is, the third message) to the terminal. The message carries a cause value corresponding to nonsupport by a network capability, and the cause value may also indicate that no further attempt is made to obtain the network service from the current system and other systems.

In another possible implementation, if the first indication information indicates that the terminal cannot obtain the network service through the first system, but can obtain the network service through a second system, where the first system includes a system currently accessed by the terminal, and step S420 is performed, the session management function network element sends a session/connection establishment rejection message (that is, the third message) to the terminal. The message carries a cause value corresponding to a redirection indication.

In another possible implementation, if the first indication information indicates that the terminal cannot obtain the network service through the first system, but can obtain the network service through a second system, where the first system includes a system currently accessed by the terminal, and step S420 is not performed, the session management function network element sends a session/connection establishment release message (that is, the third message) to the terminal. The message carries a cause value corresponding to a redirection indication.

It should be noted that details about cases corresponding to the two different cause values (nonsupport by a network capability and a redirection indication) included in the third message and actions taken by the terminal after receiving a corresponding indication are described in S350. The details are not described herein again.

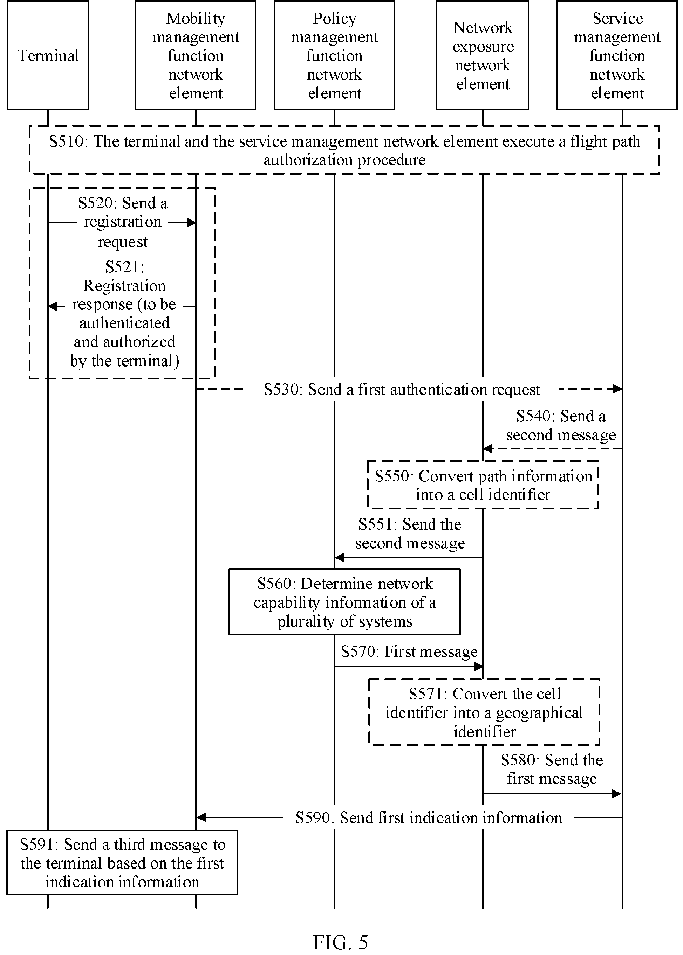

FIG. 5 is a schematic flowchart of a communication management method according to an embodiment of this application. As shown in FIG. 5, the method includes the following steps.

In S510, a terminal and a service management function network element execute a flight path authorization procedure.

It should be noted that, descriptions of step S510 are similar to the descriptions of S410. Details are not described herein again.

In S520, the terminal sends a registration request to a mobility management network element.

In S521, the mobility management network element sends a registration response to the terminal.

The mobility management network element is a network element configured to manage mobility of the terminal. For example, in 4G, the mobility management network element may be an MME network element, and in 5G, the mobility management network element may be an AMF network element. This is not limited in this embodiment of this application.

Specifically, the mobility management network element determines that a UAV is allowed to register with a 3GPP network as a common UE. When it is determined that further authentication and authorization are required to determine whether the UAV can perform a UAV operation, optionally, an indication of pending UAV authentication and authorization (pending UUAA) is included when a registration acceptance message is sent. Specifically, the indication of pending UAV authentication and authorization is used to indicate that the UAV is authorized and authenticated in a 3GPP system, but the 3GPP system needs to request further UAV authentication and authorization from a USS/UTM. Before obtaining an authorization and authentication success response from the USS/UTM, the UAV cannot initiate C2 communication with a UAVC. It should be understood that the registration acceptance message may not include the indication of pending UAV authentication and authorization. This is not limited in this embodiment of this application.

In S530, the mobility management network element sends a first authentication request to the service management function network element.

In S540, the service management function network element sends a second message to a network exposure function network element.

In S550, the network exposure function network element converts location information represented in a geographical form into location information represented in a form of a cell identifier or a tracking area identifier list.

In S551, a policy management function network element sends a first message to the network exposure function network element.

In S560, the policy management function network element determines network capability information of a plurality of systems.

In S570, the service management function network element receives the first message from the policy management function network element.

In S571, the network exposure function network element converts the location information represented in the form of a cell identifier or a tracking area identifier list into the location information represented in the geographical form.

In S580, the service management function network element receives the first message forwarded by the network exposure function network element, where the first message includes the network capability information of the plurality of systems.

It should be noted that, descriptions of corresponding steps of S540 to S580 are similar to descriptions of S440 and S480. Details are not described herein again.

In S590, the service management function network element sends first indication information to the mobility management function network element.

Specifically, the service management function network element sends the first indication information to the mobility management network element. Correspondingly, the mobility management network element receives the first indication information from the service management function network element. The first indication information indicates whether the terminal can obtain a network service through the plurality of systems. It should be understood that details about cases of sending the first indication information in step S590 are similar to details in step S340. The details are not described herein again.

In S591, the mobility management function network element sends a third message to the terminal based on the first indication information.

Specifically, the third message may be a configuration update command message or a deregistration request message. It should be understood that this is not limited in this embodiment of this application.

In another possible implementation, when the first indication information indicates that the terminal cannot obtain the network service through a first system, the mobility management function network element sends the third message to the terminal. The message carries a cause value corresponding to nonsupport by a network capability, and the cause value may also indicate a system that is not supportive, that is, indicate that the first system is not supportive.

In another possible implementation, when the first indication information indicates that the terminal cannot obtain the network service through any one of the plurality of systems, the mobility management function network element sends the third message to the terminal. The message carries a cause value corresponding to nonsupport by a network capability, and the cause value may also indicate that no further attempt is made to obtain the network service from the current system and other systems.

In another possible implementation, when the first indication information indicates that the terminal cannot obtain the network service through the first system, but can obtain the network service through a second system, where the first system includes a system currently accessed by the terminal, the mobility management function network element sends the third message to the terminal, where the message carries a cause value corresponding to a redirection indication.

It should be noted that details about cases corresponding to the two different cause values (nonsupport by a network capability and a redirection indication) included in the third message and actions taken by the terminal after receiving a corresponding indication are described in S350. The details are not described herein again.

In another possible implementation, if the UAV establishes C2 communication with the UAVC after registration, the mobility management function network element sends the received first indication information to the session management function network element. Processing performed after the session management function network element receives the first indication information is described in S491. Details are not described herein again.

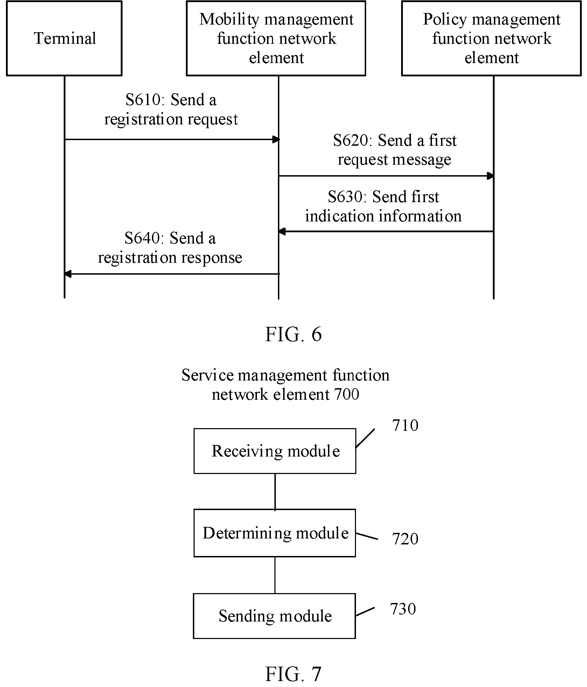

FIG. 6 is a schematic flowchart of a communication management method according to an embodiment of this application. As shown in FIG. 6, the method includes the following steps.

In S610, a terminal sends a registration request to a mobility management network element.

In S620, the mobility management function network element sends a first request message to a policy management function network element.

Specifically, the first request message may be a network capability subscription message or a network capability request message, and the first request message includes a potential registration area. The mobility management network element determining a potential registration area for a UAV based on a mobility model, a permitted/prohibited area, and the like may be understood as follows: The mobility management network element infers, based on a previous flight path of the UAV, information about a possible flight path. In other words, the potential registration area should include possible flight paths of the UAV as much as possible. It should be understood that the potential registration area may be a tracking area identifier list or a cell identifier list. This is not limited in this embodiment of this application.

It should be noted that the mobility model is a concept in 5G. The mobility management network element determines and updates the mobility model based on subscription of the terminal, mobility statistics of the terminal, local network configuration, auxiliary information provided by the terminal, and the like. This is not limited in this embodiment of this application.

In S630, the policy management function network element sends first indication information to the mobility management function network element.

After determining network capability information, the policy management function network element sends the first indication information to the mobility management network element, where the first indication information indicates whether the terminal can obtain the network service through a plurality of systems. It should be understood that this is not limited in this embodiment of this application.

In a possible implementation, after receiving the network capability information of a plurality of systems on a flight path of the terminal, the policy management function network element determines, based on a situation in which network capability information of at least one first system in the plurality of systems does not support C2 communication on the flight path, that the terminal cannot obtain the network service through the first system. In this case, the first indication information is sent to the mobility management network element, where the first indication information indicates that the terminal cannot obtain the network service through the first system.

In another possible implementation, after receiving the network capability information of the plurality of systems on the flight path of the terminal, the policy management function network element determines, based on a situation in which network capability information of at least one first system in the plurality of systems does not support C2 communication on the flight path, that the terminal cannot obtain the network service through the first system, but network capability information of a second system in the plurality of systems support C2 communication on the flight path, where the first system and the second system have no intersection. In this case, the first indication information is sent to the mobility management network element, where the first indication information indicates that the terminal cannot obtain the network service through the first system, but the terminal can be redirected to the second system to obtain the network service.

In another possible implementation, after receiving the network capability information of the plurality of systems on the path of the terminal, the policy management function network element determines, based on a situation in which network capability information of any one of the plurality of systems does not support C2 communication on the flight path, that the terminal cannot obtain the network service through any system. In this case, the first indication information is sent to the mobility management network element, where the first indication information indicates that the terminal cannot obtain the network service through any one of the plurality of systems.

In another possible implementation, after receiving the network capability information of the plurality of systems on the path of the terminal, the policy management function network element may directly send the network capability information of the plurality of systems to the mobility management network element, and the mobility management network element determines, based on the network capability information of the plurality of systems, whether network capabilities of the plurality of systems are supportive. There may be three cases: The terminal cannot obtain the network service through the first system; the terminal can be redirected to the second system to obtain the network service; and the terminal cannot obtain the network service through any one of the plurality of systems.

It should be understood that the policy management function network element may alternatively be a subscriber data management network element. In other words, the mobility management network element may also send the first request message to the subscriber data management network element. Details are not described herein.

The subscriber data management network element is a network element configured to manage subscriber data. For example, in 4G, the subscriber data management network element may be a home subscriber server (home subscriber server, HSS) network element, and in 5G, the subscriber data management network element may be a unified data management (unified data management, UDM) network element. This is not limited in this embodiment of this application.

In S640, the mobility management function network element sends a registration response to the terminal.

Specifically, the AMF sends the registration response to the terminal based on the received first indication information or network capability information. It should be noted that if the AMF receives the network capability information, the AMF further determines whether a network capability is supportive or redirection is required, and sends the registration response to the terminal based on a specific situation. The registration response may be a registration acceptance message or a registration rejection message. Details are described as follows:

In a possible implementation, if the AMF indicates, based on the received first indication information, or determines, based on network capability information, that the terminal cannot obtain the network service through the first system, the AMF sends a registration rejection message to the terminal, and indicates, in the message, that the network capability is not supportive. The message may also indicate a system that is not supportive, that is, the first system. In this case, the terminal does not make further attempt to establish, in the first system, a session used for C2 communication with a UAVC.

In another possible implementation, if the AMF indicates, based on the received first indication information indication, or determines, based on the network capability information, that the terminal cannot obtain the network service through the first system, but the terminal can obtain the network service through the second system due to redirection, a registration rejection message is sent to the terminal, where the message indicates that redirection is required, and the message may also indicate a system for redirection, that is, the second system. In this case, the terminal does not make further attempt to establish C2 communication in the first system, but attempts to establish C2 communication in the second system.

In another possible implementation, if the AMF indicates, based on the received first indication information indication, or determines, based on the network capability information, that the terminal cannot obtain the network service through any one of the plurality of systems, a registration rejection message is sent to the terminal, where the message indicates that the network capability is not supportive, and the message may also indicate that no further attempt is made to obtain the network service from a current system and other systems. In this case, the terminal does not make further attempt to establish, in any system, a session used for C2 communication with the UAVC.

In another possible implementation, if the AMF indicates, based on the first indication information, or determines, based on the network capability information, that the terminal can obtain the network service through the first system, the AMF sends a registration acceptance message to the terminal, where the message may indicate that the network capability is supportive. In this case, the terminal may attempt to establish C2 communication in the first system.

FIG. 7 is a schematic block diagram of a service management function network element 700 according to an embodiment of this application. As shown in FIG. 7, the service management function network element 700 includes the following modules:
a receiving module 710, configured to receive a first message, where the first message includes network capability information of a plurality of systems, the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal;
a determining module 720, configured to determine, based on the network capability information of the plurality of systems, whether the terminal can obtain the network service through a first system, where the first system is one or more of the plurality of systems; and
a sending module 730, configured to send first indication information, where the first indication information indicates whether the terminal can obtain the network service through the first system.

In some embodiments, the sending module 730 is specifically configured to: the first indication information indicates that the terminal cannot obtain the network service through the first system.

In some embodiments, the sending module 730 is further configured to: the first indication information indicates that the terminal can obtain the network service through a second system, where the second system is one or more of the plurality of systems, and the first system and the second system have no intersection.

In some embodiments, the sending module 730 is further configured to: the first indication information indicates that the terminal cannot obtain the network service through any one of the plurality of systems.

In some embodiments, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

In some embodiments, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

In some embodiments, the sending module 730 is further configured to send a second message, where the second message is used to request the network capability information of the plurality of systems, and the second message includes the first area and/or the first time range.

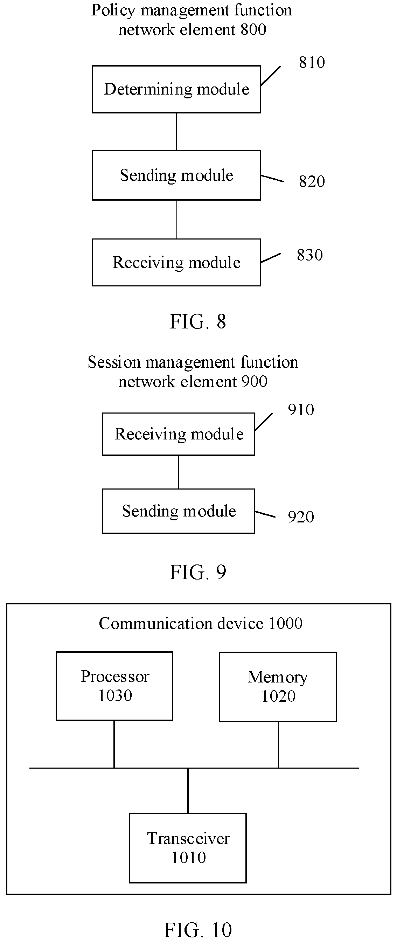

FIG. 8 is a schematic block diagram of a policy management function network element 800 according to an embodiment of this application. As shown in FIG. 8, the policy management function network element 800 includes the following modules:
a determining module 810, configured to determine network capability information of a plurality of systems, where the plurality of systems include a system that can be selected by a terminal, the network capability information is information about a capability of the plurality of systems to provide a network service for the terminal in at least one of a first area and a first time range, the first area includes a planned flight area of the terminal, and the first time range includes a planned flight time range of the terminal; and
a sending module 820, configured to send a first message, where the first message includes the network capability information of the plurality of systems.

Alternatively, the sending module 820 is configured to send first indication information based on the network capability information of the plurality of systems, where the first indication information indicates whether the terminal can obtain the network service through a first system.

The first system is one or more of the plurality of systems, and the first system includes a system currently accessed by the terminal.

In some embodiments, the sending module 820 is specifically configured to: the first indication information indicates that the terminal cannot obtain the network service through the first system.

In some embodiments, the sending module 820 is specifically configured to: the first indication information indicates that the terminal is redirected to a second system to obtain the network service, where the second system is one or more of the plurality of systems, and the first system and the second system have no intersection.

In some embodiments, the sending module 820 is further configured to: the first indication information indicates that the terminal cannot obtain the network service through any one of the plurality of systems.

In some embodiments, before determining the network capability information of the plurality of systems, the policy management function network element 800 further includes:
a receiving module 830, configured to receive a second message, where the second message is used to request the network capability information of the plurality of systems, and the second message includes the first area and/or the first time range.

The determining module 810 is further configured to determine the network capability information of the plurality of systems based on the second message.

In some embodiments, the network capability information is information about an area in which the plurality of systems allow the terminal to obtain the network service in at least one of the first area and the first time range or information about an area in which the plurality of systems do not allow the terminal to obtain the network service in at least one of the first area and the first time range.

In some embodiments, the network capability information is information about an area in which network coverage providing the network service for the terminal does not exist in the plurality of systems in at least one of the first area and the first time range or information about an area in which network coverage providing the network service for the terminal exists in the plurality of systems in at least one of the first area and the first time range.

FIG. 9 is a schematic block diagram of a session management function network element 900 according to an embodiment of this application. As shown in FIG. 9, the session management function network element 900 includes the following modules:
a receiving module 910, configured to receive first indication information, where the first indication information indicates whether a terminal can obtain a network service through a first system in at least one of a first area and a first time range; and
a sending module 920, configured to send a third message to the terminal based on the first indication information, where the third message indicates whether the terminal is allowed to obtain the network service through the first system, where
the first area includes a planned flight area of the terminal, the first time range includes a planned flight time range of the terminal, the first system is one or more of a plurality of systems, the plurality of systems include a system that can be selected by the terminal, and the first system includes a system currently accessed by the terminal.

In some embodiments, the first indication information indicates that the terminal cannot obtain the network service through the first system; and
the sending module 920 is specifically configured to: the third message indicates that the terminal is not allowed to obtain the network service through the first system.

In some embodiments, the sending module 920 is specifically configured to: the third message indicates that the terminal is redirected to a second system to obtain the network service, where the second system is one or more of the plurality of systems, and the first system and the second system have no intersection.

In some embodiments, the sending module is specifically configured to: the third message indicates that the terminal is not allowed to obtain the network service through any one of the plurality of systems.

FIG. 10 is a schematic block diagram of a communication device 1000 according to this application. The communication device 1000 includes:
a memory 1010, configured to store a program, where the program includes code;
a transceiver 1020, configured to communicate with another device; and
a processor 1030, configured to execute the program code in the memory 1010.

Optionally, the processor 1030 can implement the operations in the method when the code is executed. For brevity, details are not described herein again. The transceiver 1020 is configured to perform specific signal sending and receiving when driven by the processor 1030.

The communication device 1000 may be any one of the service management function network element, the policy management function network element, the session management function network element, and perform operations of a determining module. The transceiver may include a transmitter and/or a receiver, which respectively perform corresponding steps of the sending module and the receiving module.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. The parts displayed as units may or may not be physical units, in other words, may be located in one position, or may be distributed on a plurality of network units. Some or all of the units may be selected based on actual requirements to achieve the objectives of the solutions of the embodiments.

In addition, function units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, the term "and/or" describes an association relationship between associated objects and represents that three relationships may exist. For example, A and/or B may indicate the following cases: Only A exists, both A and B exist, and only B exists, where A and B may be singular or plural. The character "/" usually indicates an "or" relationship between associated objects.

The term "at least one of" in this specification indicates all combinations or any combination of listed items. For example, "at least one of A, B, and C" may indicate the following six cases: Only A exists, only B exists, only C exists, A and B coexist, B and C coexist, and A, B, and C coexist, where A may be singular or plural, B may be singular or plural, and C may be singular or plural.

It should be understood that in embodiments of this application, "B corresponding to A" represents that B is associated with A, and B may be determined based on A. However, it should be further understood that determining B based on A does not mean that B is determined only based on A, and B may be alternatively determined based on A and/or other information.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication management method, wherein the method is executed by a service management function network element, and comprises:
receiving (S330, S480) a first message, wherein the first message comprises network capability information of a plurality of systems (200), the plurality of systems (200) comprise a system (200) that can be selected by a terminal, the network capability information is information about a capability of the plurality of systems (200) to provide a network service for the terminal in at least one of a first area and a first time range, the first area comprises a planned flight area of the terminal, and the first time range comprises a planned flight time range of the terminal;
determining, based on the network capability information of the plurality of systems (200), whether the terminal can obtain the network service through a first system, wherein the first system is one or more of the plurality of systems (200); and
sending (S340) first indication information, wherein the first indication information indicates whether the terminal can obtain the network service through the first system;
wherein that the first indication information indicates whether the terminal can obtain the network service through the first system comprises:
the first indication information indicates that the terminal cannot obtain the network service through the first system; and wherein
the first indication information indicates that the terminal can obtain the network service through a second system, wherein
the second system is one or more of the plurality of systems (200), and the first system and the second system have no intersection.

2. The method according to claim 1, comprising:
sending (S310, S440, S540) a second message, wherein the second message is used to request the network capability information of the plurality of systems (200), wherein
the second message comprises the first area and/or the first time range.

3. The method according to any one of claims 1 to 2, wherein
the network capability information is information about an area in which the plurality of systems (200) allow the terminal to obtain the network service in at least one of the first area and the first time range or information about an area in which the plurality of systems (200) do not allow the terminal to obtain the network service in at least one of the first area and the first time range.

4. The method according to any one of claims 1 to 3, wherein
the network capability information is information about an area in which network coverage providing the network service for the terminal does not exist in the plurality of systems (200) in at least one of the first area and the first time range or information about an area in which network coverage providing the network service for the terminal exists in the plurality of systems (200) in at least one of the first area and the first time range.

5. A service management function network element, comprising:
a receiving module (710, 830, 910), configured to receive a first message, wherein the first message comprises network capability information of a plurality of systems (200), the plurality of systems (200) comprise a system (200) that can be selected by a terminal, the network capability information is information about a capability of the plurality of systems (200) to provide a network service for the terminal in at least one of a first area and a first time range, the first area comprises a planned flight area of the terminal, and the first time range comprises a planned flight time range of the terminal;
a determining module (720, 810), configured to determine, based on the network capability information of the plurality of systems (200), whether the terminal can obtain the network service through a first system, wherein the first system is one or more of the plurality of systems (200); and
a sending module (730, 820, 920), configured to send first indication information, wherein the first indication information indicates whether the terminal can obtain the network service through the first system;
wherein the sending module (730, 820, 920) is specifically further configured to send:
the first indication information indicating that the terminal cannot obtain the network service through the first system; and wherein
the first indication information indicates that the terminal can obtain the network service through a second system, and wherein
the second system is one or more of the plurality of systems (200), and the first system and the second system have no intersection.

6. The service management function network element according to claim 5, wherein the sending module (730, 820, 920) is specifically configured to:
send a second message, wherein the second message is used to request the network capability information of the plurality of systems (200), wherein
the second message comprises the first area and/or the first time range.

7. The service management function network element according to any one of claims 5 to 6,
wherein
the network capability information is information about an area in which the plurality of systems (200) allow the terminal to obtain the network service in at least one of the first area and the first time range or information about an area in which the plurality of systems (200) do not allow the terminal to obtain the network service in at least one of the first area and the first time range.

8. The service management function network element according to any one of claims 5 to 6,
wherein
the network capability information is information about an area in which network coverage providing the network service for the terminal does not exist in the plurality of systems (200) in at least one of the first area and the first time range or information about an area in which network coverage providing the network service for the terminal exists in the plurality of systems (200) in at least one of the first area and the first time range.

9. A system (200), comprising:
the service management function network element according to any one of claims 5 to 8; and
a policy management function network element.

10. The system according to claim 9, wherein the policy management function network element comprises:
a determining module (720, 810), configured to determine network capability information of a plurality of systems (200), wherein the plurality of systems (200) comprise a system (200) that can be selected by a terminal, the network capability information is information about a capability of the plurality of systems (200) to provide a network service for the terminal in at least one of a first area and a first time range, the first area comprises a planned flight area of the terminal, and the first time range comprises a planned flight time range of the terminal; and
a sending module (730, 820, 920), configured to send a first message, wherein the first message comprises the network capability information of the plurality of systems (200).

## Patentansprüche

1. Verfahren zur Kommunikationsverwaltung, wobei das Verfahren durch ein Dienstverwaltungsfunktionsnetzelement ausgeführt wird und Folgendes umfasst:
Empfangen (S330, S480) einer ersten Nachricht, wobei die erste Nachricht Netzfähigkeitsinformationen einer Vielzahl von Systemen (200) umfasst, die Vielzahl von Systemen (200) ein System (200) umfasst, das durch ein Endgerät ausgewählt werden kann, die Netzfähigkeitsinformationen Informationen über eine Fähigkeit der Vielzahl von Systemen (200) sind, einen Netzdienst für das Endgerät in mindestens einem einer ersten Region und eines ersten Zeitbereichs bereitzustellen, die erste Region eine geplante Flugregion des Endgeräts umfasst und der erste Zeitbereich einen geplanten Flugzeitbereich des Endgeräts umfasst;
Bestimmen, basierend auf den Netzfähigkeitsinformationen der Vielzahl von Systemen (200), ob das Endgerät den Netzdienst über ein erstes System erlangen kann, wobei das erste System eines oder mehrere der Vielzahl von Systemen (200) ist; und
Senden (S340) erster Angabeinformationen, wobei die ersten Angabeinformationen angeben, ob das Endgerät den Netzdienst über das erste System erlangen kann;
wobei, dass die ersten Angabeinformationen angeben, ob das Endgerät den Netzdienst über das erste System erlangen kann, Folgendes umfasst:
die ersten Angabeinformationen geben an, dass das Endgerät den Netzdienst nicht über das erste System erlangen kann; und wobei die ersten Angabeinformationen angeben, dass das Endgerät den Netzdienst über ein zweites System erlangen kann, wobei
das zweite System eines oder mehrere der Vielzahl von Systemen (200) ist und das erste System und das zweite System keine Überschneidung aufweisen.

2. Verfahren nach Anspruch 1, umfassend:
Senden (S310, S440, S540) einer zweiten Nachricht, wobei die zweite Nachricht dazu verwendet wird, die Netzfähigkeitsinformationen der Vielzahl von Systemen (200) anzufordern, wobei
die zweite Nachricht die erste Region und/oder den ersten Zeitbereich umfasst.

3. Verfahren nach einem der Ansprüche 1 bis 2, wobei
die Netzfähigkeitsinformationen Informationen über eine Region sind, in der die Vielzahl von Systemen (200) es dem Endgerät ermöglicht, den Netzdienst in mindestens einem der ersten Region und des ersten Zeitbereichs zu erlangen, oder Informationen über eine Region, in der die Vielzahl von Systemen (200) es dem Endgerät nicht ermöglicht, den Netzdienst in mindestens einem der ersten Region und des ersten Zeitbereichs zu erlangen.

4. Verfahren nach einem der Ansprüche 1 bis 3, wobei
die Netzfähigkeitsinformationen Informationen über eine Region sind, in der eine Netzabdeckung, die den Netzdienst für das Endgerät bereitstellt, in mindestens einem der ersten Region und des ersten Zeitbereichs nicht in der Vielzahl von Systemen (200) vorliegt, oder Informationen über eine Region, in der eine Netzabdeckung, die den Netzdienst für das Endgerät bereitstellt, in mindestens einem der ersten Region und des ersten Zeitbereichs in der Vielzahl von Systemen (200) vorliegt.

5. Dienstverwaltungsfunktionsnetzelement, umfassend:
ein Empfangsmodul (710, 830, 910), das dazu konfiguriert ist, eine erste Nachricht zu empfangen, wobei die erste Nachricht Netzfähigkeitsinformationen einer Vielzahl von Systemen (200) umfasst, die Vielzahl von Systemen (200) ein System (200) umfasst, das durch ein Endgerät ausgewählt werden kann, die Netzfähigkeitsinformationen Informationen über eine Fähigkeit der Vielzahl von Systemen (200) sind, einen Netzdienst für das Endgerät in mindestens einem einer ersten Region und eines ersten Zeitbereichs bereitzustellen, die erste Region eine geplante Flugregion des Endgeräts umfasst und der erste Zeitbereich einen geplanten Flugzeitbereich des Endgeräts umfasst;
ein Bestimmungsmodul (720, 810), das dazu konfiguriert ist, basierend auf den Netzfähigkeitsinformationen der Vielzahl von Systemen (200) zu bestimmen, ob das Endgerät den Netzdienst über ein erstes System erlangen kann, wobei das erste System eines oder mehrere der Vielzahl von Systemen (200) ist; und
ein Sendemodul (730, 820, 920), das dazu konfiguriert ist, erste Angabeinformationen zu senden, wobei die ersten Angabeinformationen angeben, ob das Endgerät den Netzdienst über das erste System erlangen kann;
wobei das Sendemodul (730, 820, 920) speziell ferner dazu konfiguriert ist, Folgendes zu senden:
die ersten Angabeinformationen, die angeben, dass das Endgerät den Netzdienst nicht über das erste System erlangen kann; und
wobei
die ersten Angabeinformationen angeben, dass das Endgerät den Netzdienst über ein zweites System erlangen kann, und wobei
das zweite System eines oder mehrere der Vielzahl von Systemen (200) ist und das erste System und das zweite System keine Überschneidung aufweisen.

6. Dienstverwaltungsfunktionsnetzelement nach Anspruch 5, wobei das Sendemodul (730, 820, 920) speziell zu Folgendem konfiguriert ist:
Senden einer zweiten Nachricht, wobei die zweite Nachricht dazu verwendet wird, die Netzfähigkeitsinformationen der Vielzahl von Systemen (200) anzufordern, wobei
die zweite Nachricht die erste Region und/oder den ersten Zeitbereich umfasst.

7. Dienstverwaltungsfunktionsnetzelement nach einem der Ansprüche 5 bis 6, wobei
die Netzfähigkeitsinformationen Informationen über eine Region sind, in der die Vielzahl von Systemen (200) es dem Endgerät ermöglicht, den Netzdienst in mindestens einem der ersten Region und des ersten Zeitbereichs zu erlangen, oder Informationen über eine Region, in der die Vielzahl von Systemen (200) es dem Endgerät nicht ermöglicht, den Netzdienst in mindestens einem der ersten Region und des ersten Zeitbereichs zu erlangen.

8. Dienstverwaltungsfunktionsnetzelement nach einem der Ansprüche 5 bis 6, wobei
die Netzfähigkeitsinformationen Informationen über eine Region sind, in der eine Netzabdeckung, die den Netzdienst für das Endgerät bereitstellt, in mindestens einem der ersten Region und des ersten Zeitbereichs nicht in der Vielzahl von Systemen (200) vorliegt, oder Informationen über eine Region, in der eine Netzabdeckung, die den Netzdienst für das Endgerät bereitstellt, in mindestens einem der ersten Region und des ersten Zeitbereichs in der Vielzahl von Systemen (200) vorliegt.

9. System (200), umfassend:
das Dienstverwaltungsfunktionsnetzelement nach einem der Ansprüche 5 bis 8; und
ein Richtlinienverwaltungsfunktionsnetzelement.

10. System nach Anspruch 9, wobei das Richtlinienverwaltungsfunktionsnetzelement Folgendes umfasst:
ein Bestimmungsmodul (720, 810), das dazu konfiguriert ist, Netzfähigkeitsinformationen einer Vielzahl von Systemen (200) zu bestimmen, wobei die Vielzahl von Systemen (200) ein System (200) umfasst, das durch ein Endgerät ausgewählt werden kann, die Netzfähigkeitsinformationen Informationen über eine Fähigkeit der Vielzahl von Systemen (200) sind, einen Netzdienst für das Endgerät in mindestens einem einer ersten Region und eines ersten Zeitbereichs bereitzustellen, die erste Region eine geplante Flugregion des Endgeräts umfasst und der erste Zeitbereich einen geplanten Flugzeitbereich des Endgeräts umfasst; und
ein Sendemodul (730, 820, 920), das dazu konfiguriert ist, eine erste Nachricht zu senden, wobei die erste Nachricht die Netzfähigkeitsinformationen der Vielzahl von Systemen (200) umfasst.

## Revendications

1. Procédé de gestion de communication, dans lequel le procédé est exécuté par un élément de réseau de fonction de gestion de service, et comprend :
la réception (S330, S480) d'un premier message, dans lequel le premier message comprend des informations de capacité réseau d'une pluralité de systèmes (200), la pluralité de systèmes (200) comprend un système (200) qui peut être sélectionné par un terminal, les informations de capacité réseau sont des informations sur une capacité de la pluralité de systèmes (200) à fournir un service réseau au terminal dans au moins l'une d'une première zone et d'une première plage horaire, la première zone comprend une zone de vol prévue du terminal, et la première plage horaire comprend une plage horaire de vol prévue du terminal ;
le fait de déterminer, sur la base des informations de capacité réseau de la pluralité de systèmes (200), si le terminal peut obtenir le service réseau via un premier système, dans lequel le premier système est un ou plusieurs de la pluralité de systèmes (200) ; et
l'envoi (S340) de premières informations d'indication, dans lequel les premières informations d'indication indiquent si le terminal peut obtenir le service réseau via le premier système ;
dans lequel le fait que les premières informations d'indication indiquent si le terminal peut obtenir le service réseau via le premier système comprend :
les premières informations d'indication indiquent que le terminal ne peut pas obtenir le service réseau via le premier système ; et dans lequel
les premières informations d'indication indiquent que le terminal peut obtenir le service réseau via un second système, dans lequel
le second système est un ou plusieurs de la pluralité de systèmes (200), et le premier système et le second système n'ont aucune intersection.

2. Procédé selon la revendication 1, comprenant :
l'envoi (S310, S440, S540) d'un second message, dans lequel le second message est utilisé pour demander les informations de capacité réseau de la pluralité de systèmes (200), dans lequel
le second message comprend la première zone et/ou la première plage horaire.

3. Procédé selon l'une quelconque des revendications 1 et 2, dans lequel
les informations de capacité réseau sont des informations sur une zone dans laquelle la pluralité de systèmes (200) permettent au terminal d'obtenir le service réseau dans au moins l'une de la première zone et de la première plage horaire ou des informations sur une zone dans laquelle la pluralité de systèmes (200) ne permettent pas au terminal d'obtenir le service réseau dans au moins l'une de la première zone et de la première plage horaire.

4. Procédé selon l'une quelconque des revendications 1 à 3, dans lequel
les informations de capacité réseau sont des informations sur une zone dans laquelle la couverture réseau fournissant le service réseau au terminal n'existe pas dans la pluralité de systèmes (200) dans au moins l'une de la première zone et de la première plage horaire ou des informations sur une zone dans laquelle la couverture réseau fournissant le service réseau au terminal existe dans la pluralité de systèmes (200) dans au moins l'une de la première zone et de la première plage horaire.

5. Élément de réseau de fonction de gestion de service, comprenant :
un module de réception (710, 830, 910), configuré pour recevoir un premier message, dans lequel le premier message comprend des informations de capacité réseau d'une pluralité de systèmes (200), la pluralité de systèmes (200) comprend un système (200) qui peut être sélectionné par un terminal, les informations de capacité réseau sont des informations sur une capacité de la pluralité de systèmes (200) à fournir un service réseau au terminal dans au moins l'une d'une première zone et d'une première plage horaire, la première zone comprend une zone de vol prévue du terminal, et la première plage horaire comprend une plage horaire de vol prévue du terminal ;
un module de détermination (720, 810), configuré pour déterminer, sur la base des informations de capacité réseau de la pluralité de systèmes (200), si le terminal peut obtenir le service réseau via un premier système, dans lequel le premier système est un ou plusieurs de la pluralité de systèmes (200) ;
et
un module d'envoi (730, 820, 920), configuré pour envoyer de premières informations d'indication, dans lequel les premières informations d'indication indiquent si le terminal peut obtenir le service réseau via le premier système ;
dans lequel le module d'envoi (730, 820, 920) est spécifiquement également configuré pour envoyer :
les premières informations d'indication indiquant que le terminal ne peut pas obtenir le service réseau via le premier système ; et dans lequel
les premières informations d'indication indiquent que le terminal peut obtenir le service réseau via un second système, et
dans lequel
le second système est un ou plusieurs de la pluralité de systèmes (200), et le premier système et le second système n'ont aucune intersection.

6. Élément de réseau de fonction de gestion de service selon la revendication 5, dans lequel le module d'envoi (730, 820, 920) est spécifiquement configuré pour :
envoyer un second message, dans lequel le second message est utilisé pour demander les informations de capacité réseau de la pluralité de systèmes (200), dans lequel
le second message comprend la première zone et/ou la première plage horaire.

7. Élément de réseau de fonction de gestion de service selon l'une quelconque des revendications 5 et 6, dans lequel
les informations de capacité réseau sont des informations sur une zone dans laquelle la pluralité de systèmes (200) permettent au terminal d'obtenir le service réseau dans au moins l'une de la première zone et de la première plage horaire ou des informations sur une zone dans laquelle la pluralité de systèmes (200) ne permettent pas au terminal d'obtenir le service réseau dans au moins l'une de la première zone et de la première plage horaire.

8. Élément de réseau de fonction de gestion de service selon l'une quelconque des revendications 5 et 6, dans lequel
les informations de capacité réseau sont des informations sur une zone dans laquelle la couverture réseau fournissant le service réseau au terminal n'existe pas dans la pluralité de systèmes (200) dans au moins l'une de la première zone et de la première plage horaire ou des informations sur une zone dans laquelle la couverture réseau fournissant le service réseau au terminal existe dans la pluralité de systèmes (200) dans au moins l'une de la première zone et de la première plage horaire.

9. Système (200), comprenant :
l'élément de réseau de fonction de gestion de service selon l'une quelconque des revendications 5 à 8 ; et
un élément de réseau de fonction de gestion de politique.

10. Système selon la revendication 9, dans lequel l'élément de réseau de fonction de gestion de politique comprend :
un module de détermination (720, 810), configuré pour déterminer des informations de capacité réseau d'une pluralité de systèmes (200), dans lequel la pluralité de systèmes (200) comprend un système (200) qui peut être sélectionné par un terminal, les informations de capacité réseau sont des informations sur une capacité de la pluralité de systèmes (200) à fournir un service réseau au terminal dans au moins l'une d'une première zone et d'une première plage horaire, la première zone comprend une zone de vol prévue du terminal, et la première plage horaire comprend une plage horaire de vol prévue du terminal ; et
un module d'envoi (730, 820, 920), configuré pour envoyer un premier message, dans lequel le premier message comprend les informations de capacité réseau de la pluralité de systèmes (200) .
